# EUROPEAN PATENT SPECIFICATION

(11) **EP 2 763 461 B1**
(45) Date of publication and mention of the grant of the patent: **31.05.2017**
(21) Application number: 12838103.5
(22) Date of filing: 08.10.2012
(51) Int. Cl.: H04W 36/06, H04W 36/00, H04W 36/08

(54) **RADIO RESOURCE CONTROL CONNECTION REESTABLISHMENT METHOD**
VERFAHREN ZUR WIEDERHERSTELLUNG EINER FUNKRESSOURCEN-STEUERVERBINDUNG
PROCÉDÉ DE RÉTABLISSEMENT DE CONNEXION DE GESTION DES RESSOURCES RADIO

(30) Priority: 03.10.2011 CN 201110296379
(43) Date of publication of application: 06.08.2014
(73) Proprietor: Huawei Technologies Co., Ltd., Longgang District Shenzhen, Guangdong 518129 (CN)
(72) Inventor: CHAI, Li, Shenzhen, Guangdong 518129 (CN); LIN, Bo, Shenzhen, Guangdong 518129 (CN)
(74) Representative: Pfenning, Meinig & Partner mbB
(86) International application number: PCT/CN2012/082561
(87) International publication number: WO 2013/050003

(56) References cited:
- WO-A1-2010/057127
- CN-A- 1 997 200
- CN-A- 1 997 216
- CN-A- 102 143 539
- US-A1- 2008 019 320
- US-A1- 2010 080 116
- US-A1- 2011 028 150
- US-A1- 2011 080 825
- US-A1- 2011 207 452

## Description

### TECHNICAL FIELD

The present invention relates to the field of radio communications, and in particular, to a method, a user equipment, and a base station for re-establishing a radio resource control connection.

### BACKGROUND

Currently, in a coverage range of a Long Term Evolution (Long Term Evolution, LTE) macro base station (Macro eNB), a small-cell base station, such as a pico base station (Pico), a home base station (HeNB), a femtocell (Femto), a relay base station (Relay), or another wireless access point, may be deployed so that a user equipment (User Equipment, UE) is covered by both the Macro eNB and the small-cell base station. A maximum capacity that this system can achieve is a sum of a capacity of the Macro eNB and a capacity of the small-cell base station. The whole communications system has a larger capacity than a traditional LTE macro base station network. In scenarios of an office building, a shopping mall, a campus network, and the like, using heterogeneous deployment of these small-cell base stations and the macro base station may effectively enhance network coverage and improve spectral efficiency. These small-cell base stations may access a network in a wired or wireless manner.

In this heterogeneous system, a UE can be connected to only one cell, and the cell is called a serving cell of the UE. A base station may generally have one or more cells. If a small-cell base station and a macro eNB are deployed in an intra-frequency manner, all base stations send downlink signals over a same carrier, where the downlink signals include downlink control domain signals and downlink data domain signals. Distribution of interference between cells increases and is difficult to predict because density and complexity of cell deployment in this heterogeneous system increase. Meanwhile, radio resource control (RRC) re-establishment processes that are triggered by radio link failures caused by interference also increase. An existing re-establishment technology is applicable to a network mainly deployed with macro cells, because a relatively small number of base stations are deployed in such a network and the deployment is relatively regular. However, because base stations deployed in the heterogeneous system are of a relatively large number and high complexity, the existing re-establishment technology is not applicable to the heterogeneous system. Therefore, a success rate of a process of re-establishing a radio resource control connection for a user equipment in the network is relatively low.
WO2010057127 A1 discloses that the number of handover-related failures that occur in a communication system may be reduced by taking target access point conditions into account when declaring radio link failure and/or by delaying certain handover operations. In some aspects, criteria for radio link failure detection and access terminal-controlled mobility may take into account access point parameters related to neighboring cells that may be available as mobility targets. For example, filtering mechanisms for detecting radio link failure based on radio layer problem reports may also take into account the availability of various neighbor access points and their measured signal strengths. In addition, a handover command may be sent earlier than in conventional systems (e.g., the handover command may be sent even though the target access point is weaker than the source access point) and include an indication that instructs the access terminal to delay handover until a specified condition is met. For example, handover may be delayed until the target access point becomes stronger than the source access point.
US2011028150 A1 discloses a method of updating management information for a mobile device in a wireless communication system. The method comprises performing a procedure involved in a cell change from a first cell to a second cell; sending a first request to a network for first assistance data associated with the second cell when the procedure is finished; and receiving the first assistance data from the network.
US2011080825 A1 discloses enable a user terminal to perform a fast recovery from a radio link failure. In one aspect, the improvement in recovery time is achieved by commanding or otherwise causing the user terminal to perform radio link failure (RLF) recovery at a cell that is known to possess the user context, while considering that this cell should yield good radio conditions (if not the best) to the user terminal. A cell may be predefined for use by the user terminal in recovering its radio connection. Based on providing signal strength thresholds to the user terminal, for use in determining whether to use a predefined cell for reconnecting to the network, the user terminal attempts RLF recovery first in the predefined cell. By providing user context to the predefined cell in advance of a recovery attempt by the user terminal, the time for recovery is lessened. Note that the user terminal also may infer which cells are preferred.
US2010080116 A1 discloses a method for establishing a radio resource control connection. A wireless communication device may establish a radio resource control connection with a first base station. The wireless communication device may send a message to a second base station that requests re-establishment of the radio resource control connection. The wireless communication device may receive a message from the second base station that initiates setup of a new radio resource control connection.

US2011207452 A1 discloses a method for handover in a wireless communications network includes the step of communicating information between a target network node and a source network node to enable the source network node to identify and to distinguish types of failures prior to, during or after handover. The information may relate to: "Handover command not received" due to RLF prior to handover or Handover command failure experienced in the source cell; or "Handover failure" where "Handover command received" is followed by Access failure in the target cell. The method is applicable, for example, to networks in accordance with LTE.

### SUMMARY

To resolve the problem of a relatively low success rate of a process of re-establishing a radio resource control connection for a user equipment in a network in the prior art, multiple aspects of the present invention provide a method for re-establishing a radio resource control connection.

In one aspect, the problems described above are solved by a method for re-establishing a radio resource control connection according to claim 1. Advantageous developments of the method according to claim 1 are described by the dependent claims.

In embodiments of the present invention, in the case that a user equipment does not meet a cell handover condition, the source base station sends context information of the user equipment in advance to a base station that controls at least one neighboring cell determined by the source base station; in addition, the neighboring base station that possesses the context information of the user equipment is a prepared base station capable of successfully establishing a radio resource control connection with the user equipment, and the user equipment probably selects the neighboring cell after a radio link fails; in this way, after a radio link failure occurs, a success rate of re-establishing a radio resource control connection for the user equipment is relatively high.

### BRIEF DESCRIPTION OF DRAWINGS

FIG. 1 is a flowchart of a method for re-establishing a radio resource control connection provided in an embodiment of the present invention;
FIG. 2 is a flowchart of a method for re-establishing a radio resource control connection provided in another embodiment of the present invention;
FIG. 3 is a schematic structural diagram of a network system to which a method for re-establishing a radio resource control connection is applicable provided in another embodiment of the present invention;
FIG. 4 is a flowchart of the method corresponding to FIG. 3;
FIG. 5 is a schematic structural diagram of a base station provided in an embodiment of the present invention;
FIG. 6 is a schematic structural diagram of a base station provided in another embodiment of the present invention; and
FIG. 7 is a schematic structural diagram of a user equipment provided in an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

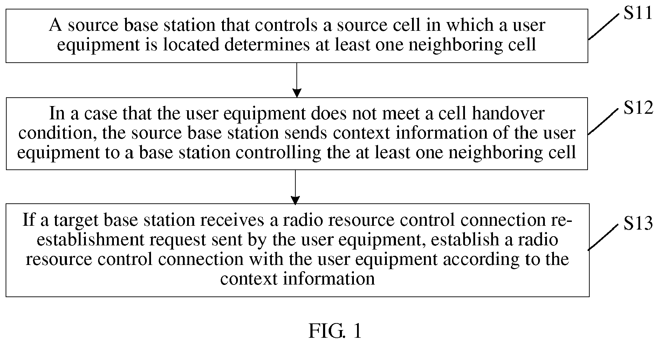

Referring to FIG. 1, FIG. 1 is a flowchart of a method for re-establishing a radio resource control connection provided in an embodiment of the present invention, where the method includes:

S11. A source base station that controls a source cell in which a user equipment is located determines at least one neighboring cell.

In this embodiment of the present invention, a serving cell in which the user equipment is located is the source cell.

In an implementation manner of this embodiment, the source base station determines the at least one neighboring cell according to location information of the user equipment. The location information may include a location of the user equipment in the source cell and a neighbor relationship between the source cell and one or more other cells. The neighbor relationship may include at least one of the following: an identity of a neighboring cell adjacent to the source cell, a cell type, signal quality, a serving frequency band, information about whether the user equipment is allowed for access, and other information.

For example, when the user equipment moves to a certain location, where the location is covered by the source cell and an interference cell at the same time, and the user equipment is not authorized to access the interference cell, the interference cell causes interference to communication between the user equipment and the source base station, but a condition for the user equipment to hand over from the source cell to the interference cell is not met. The source base station may learn, by using a positioning technology and/or historical information of the user equipment or in other manners, that the user equipment accesses the location. Then, the source base station may determine, according to the neighbor relationship between the source cell and the one or more other cells and the location of the user equipment, at least one inter-frequency neighboring cell capable of providing a service for the user terminal. If the user equipment further moves towards a center of the interference cell, a radio link failure may probably occur in the source cell, and a radio resource control connection is re-established to the inter-frequency neighboring cell. Therefore, preferably, the at least one neighboring cell includes the inter-frequency neighboring cell.

In another implementation manner of this embodiment, the source base station may also determine the at least one neighboring cell according to the location information of the user equipment and historical information of user equipments in the source cell. The user equipments in the source cell include the user equipment mentioned in the foregoing description and one or more other user equipments in the source cell.

For example, when the historical information of the user equipment or the one or more other user equipments indicates that the user equipment or the one or more other user equipments were once moved to the location in the history, a radio link failure was caused, and a radio resource control connection was finally re-established to a new cell, the source base station determines the new cell recorded in the historical information, as the neighboring cell.

In another implementation manner of this embodiment, when the user equipment obtains, by measurement, that a block error rate of the source cell is higher than a first threshold, the interference cell, that is, the cell of best signal quality, may be obtained by measurement. Then, the user equipment notifies the source base station of the interference cell. The user equipment may notify the source base station of a global cell identity or a physical cell identifier of the interference cell. The source base station may determine the interference cell notified by the user equipment, as a neighboring cell. Certainly, the source base station determines a cell to which the one or more other user equipments may hand over as a neighboring cell. The first threshold is lower than a second threshold, where the second threshold is a block error rate that triggers the user equipment to produce out-of-synchronization primitive. Because the first threshold is lower than the second threshold, the user equipment is capable of notifying, before out-of-synchronization occurs, the source base station controlling the source cell of the neighboring cell, so as to avoid a notification failure after the out-of-synchronization causes a radio link failure. In this way, after the radio link failure occurs, a success rate of re-establishing a radio resource control connection for the user equipment is relatively high.

If the user equipment further possesses an uplink resource, such as an uplink resource of last uplink resource grant UL Grant, a semi-static scheduling (Semi-Persistent Scheduling, SPS) resource, or other resources, to send the global cell identity or the physical cell identifier of the interference cell to the source base station, the user equipment sends the global cell identity or the physical cell identifier of the interference cell to the source base station by using the resource. If the uplink resource is limited, the user equipment may send only the physical cell identifier with fewer bits than the global cell identity.

If the user equipment is further capable of receiving a physical downlink control channel (Physical Downlink Control Channel, PDCCH) sent by the source base station, indicating that UL Grant sent through the PDCCH may further be received, the user equipment may send an uplink resource request to the source base station to request the source base station to allocate an uplink resource for sending the global cell identity or the physical cell identifier. Alternatively, the user equipment may request the source base station to allocate at least 28 bits of uplink resources for sending the global cell identity of the interference cell.

S12. In a case that the user equipment does not meet a cell handover condition, the source base station sends context information of the user equipment to a base station controlling the at least one neighboring cell.

In an implementation manner of this embodiment, before the user equipment meets the cell handover condition, the source base station sends the context information of the user equipment to the base station controlling the at least one neighboring cell. The context information of the user equipment is a context used for re-establishing a radio resource control (RRC) connection.

In another implementation manner of this embodiment, when the source base station receives, in S 11, a global cell identity notified by the user equipment, the source base station obtains a base station that controls a neighboring cell corresponding to the global cell identity; and the source base station sends the context information of the user equipment to the base station controlling the neighboring cell. When the source base station receives a physical cell identifier notified by the user equipment, the source base station obtains one or more base stations that control a neighboring cell corresponding to the physical cell identifier; and the source base station sends the context information of the user equipment to the one or more base stations controlling the neighboring cell.

In another implementation manner of this embodiment, the source base station may further send at least one of the following to the base station controlling the at least one neighboring cell: bearer information of the user equipment, service quality information, and a security parameter of the user equipment.

In another implementation manner of this embodiment, the source base station notifies the user equipment of the at least one neighboring cell, where the at least one neighboring cell is a cell that the user equipment preferably selects when re-establishing a radio resource control connection.

S 13. If a target base station receives a radio resource control connection re-establishment request sent by the user equipment, establish a radio resource control connection with the user equipment according to the context information.

In an implementation manner of this embodiment, the target base station is a base station controlling a neighboring cell among the at least one neighboring cell. When the user equipment further moves towards the center of the interference cell, a radio link of the user equipment fails. The user equipment may choose a cell of acceptable signal quality and send a radio resource control connection re-establishment request to the base station controlling the cell. If the target base station receives the radio resource control connection re-establishment request sent by the user equipment, a radio resource control connection may be established with the user equipment according to the context information.

In another implementation manner of this embodiment, when the target base station further receives at least one of the following sent by the source base station: the bearer information of the user equipment, the service quality information, and the security parameter of the user equipment, if the target base station receives a radio resource control connection re-establishment request sent by the user equipment, a radio resource control connection may also be established with the user equipment according to the context information and the received at least one of the following: the bearer information, the service quality information, and the security parameter of the user equipment.

In the method for re-establishing a radio resource control connection according to this embodiment of the present invention, in the case that a user equipment does not meet a cell handover condition, the source base station sends context information of the user equipment in advance to a base station that controls at least one neighboring cell determined by the source base station; in addition, the neighboring base station that possesses the context information of the user equipment is a prepared base station capable of successfully establishing a radio resource control connection with the user equipment, and the user equipment probably selects the neighboring cell after a radio link fails; in this way, after a radio link failure occurs, a success rate of re-establishing a radio resource control connection for the user equipment is relatively high.

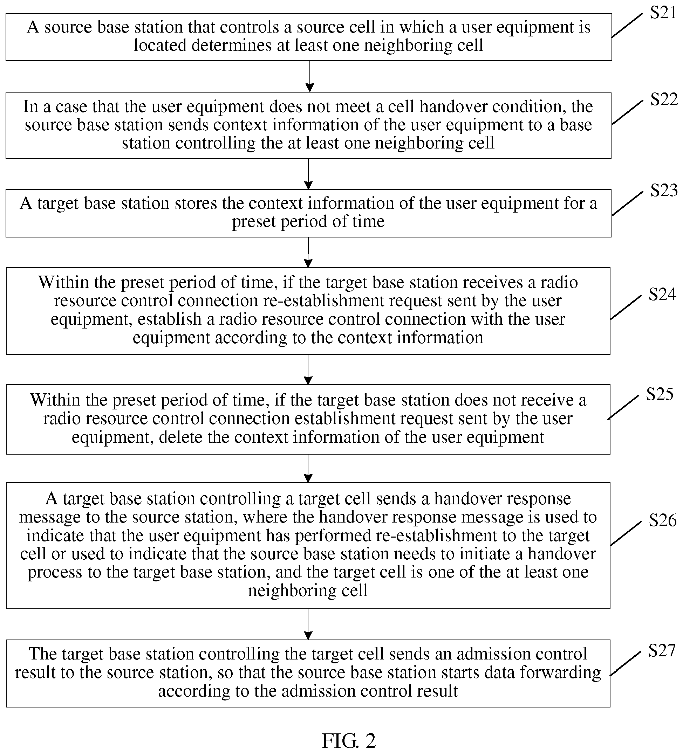

Referring to FIG. 2, FIG. 2 is a flowchart of a method for re-establishing a radio resource control connection provided in another embodiment of the present invention, where the method includes:
S21. A source base station that controls a source cell in which a user equipment is located determines at least one neighboring cell.
   Step S21 is the same as step S11 in the embodiment corresponding to FIG. 1. Therefore, the description of step S11 is applicable to step S21 in this embodiment.
S22. In a case that the user equipment does not meet a cell handover condition, the source base station sends context information of the user equipment to a base station controlling the at least one neighboring cell.

In an implementation manner of this embodiment, the source base station sends a virtual handover instruction message to the base station controlling the at least one neighboring cell, where the virtual handover instruction message includes the context information of the user equipment, and the virtual handover instruction message is used to instruct the base station controlling the at least one neighboring cell to delay performing admission control until a radio resource control connection re-establishment request is received.

In another implementation manner of this embodiment, the source base station sends a handover instruction message to the base station controlling the at least one neighboring cell, where the handover instruction message includes the context information of the user equipment and a first mark, and the first mark is used to instruct the base station controlling the at least one neighboring cell to delay performing admission control until a radio resource control connection re-establishment request is received. The first mark may be, for example, a virtual handover mark, a delay handover mark, or a handover mark that triggers re-establishment.

In another implementation manner of this embodiment, the source base station sends a handover instruction message to the base station controlling the at least one neighboring cell, where the handover instruction message includes the context information of the user equipment and a second mark, and the second mark is used to instruct the base station controlling the at least one neighboring cell to delay performing admission control for a preset period of delay time.

The source base station cannot determine a cell among the at least one cell with which the user equipment definitely re-establishes a radio resource control connection. Therefore, the base station that receives the virtual handover instruction message or the handover instruction message may not immediately perform admission control in a process of re-establishing a radio resource control connection, and instead, delays performing the admission control until the radio resource control connection re-establishment request is received or the preset period of delay time expires. In this way, it is avoided to reserve a resource too early for access of the user equipment, thereby saving resources of the base station that receives the virtual handover instruction message or the handover instruction message.

In another implementation manner of this embodiment, the source base station may further notify the user equipment of the at least one neighboring cell, so that the at least one neighboring cell becomes a cell that the user equipment preferably selects when re-establishing a radio resource control connection.

S23. A target base station stores the context information of the user equipment for a preset period of time.

In this embodiment, the target base station is a base station controlling a neighboring cell among the at least one neighboring cell. The preset period of time may be configured in the target base station in advance or notified by the source base station.

S24. Within the preset period of time, if the target base station receives a radio resource control connection re-establishment request sent by the user equipment, establish a radio resource control connection with the user equipment according to the context information.

In this embodiment, for a specific implementation manner of step S24, reference may be made to the specific implementation manner of step S13 in the embodiment corresponding to FIG. 1.

S25. Within the preset period of time, if the target base station does not receive a radio resource control connection establishment request sent by the user equipment, delete the context information of the user equipment.

In this embodiment, within the preset period of time, if the target base station does not receive a radio resource control connection re-establishment request sent by the user equipment, it is determined that the user equipment does not select the target station as an object to establish a radio resource control connection with, that is, the user equipment does not choose to access the target base station. Therefore, the context information of the user equipment is deleted to save storage resources and timer resources.

Alternatively, this embodiment may further include:
S26. A target base station controlling a target cell sends a handover response message to the source station, where the handover response message is used to indicate that the user equipment has re-established a radio resource control connection to the target cell or is used to indicate that the source base station needs to initiate a handover process to the target base station, and the target cell is one of the at least one neighboring cell.

Alternatively, this embodiment may further include:
S27. The target base station controlling the target cell sends an admission control result to the source station, so that the source base station starts data forwarding according to the admission control result.

In the method for re-establishing a radio resource control connection according to this embodiment of the present invention, in the case that a user equipment does not meet a cell handover condition, the source base station sends context information of the user equipment in advance to a base station that controls at least one neighboring cell determined by the source base station; in addition, the neighboring base station that possesses the context information of the user equipment is a prepared base station capable of successfully establishing a radio resource control connection with the user equipment, and the user equipment probably selects the neighboring cell after a radio link fails; in this way, after a radio link failure occurs, a success rate of re-establishing a radio resource control connection for the user equipment is relatively high.

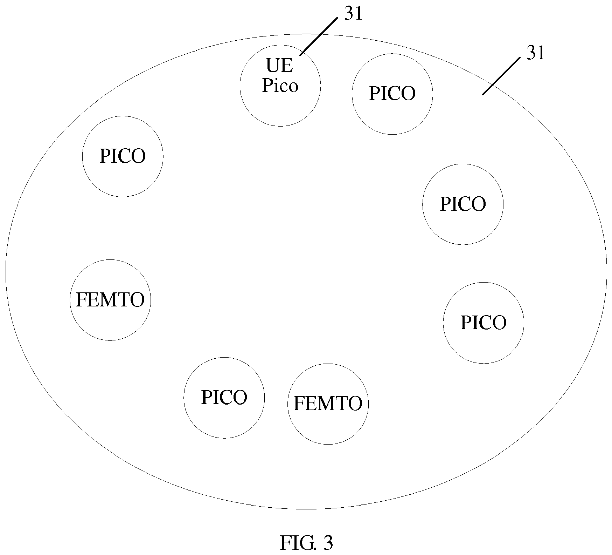

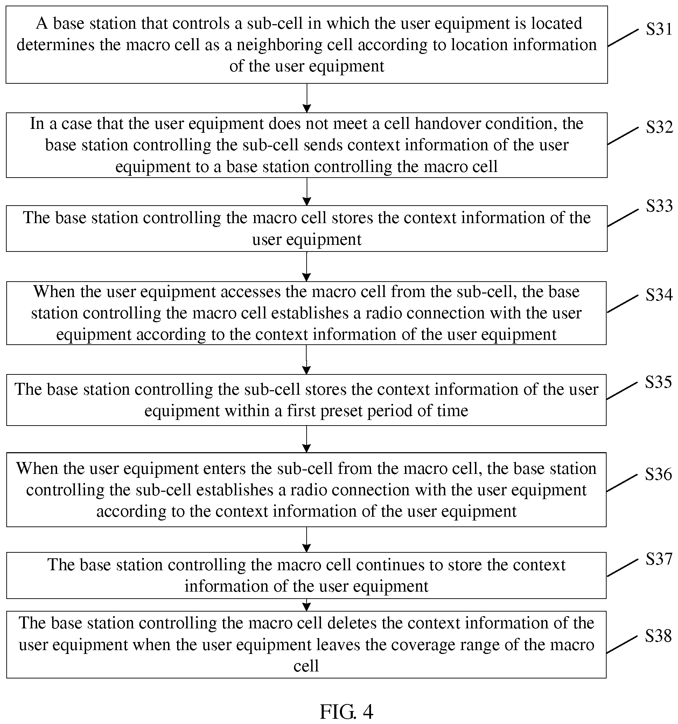

Referring to FIG. 3 and FIG. 4, FIG. 3 is a schematic structural diagram of a network system to which a method for re-establishing a radio resource control connection is applicable provided in another embodiment of the present invention, and FIG. 4 is a flowchart of the method corresponding to FIG. 3. The method in this embodiment is specific application of the method corresponding to FIG. 1 or FIG. 2. Therefore, the description of the embodiment corresponding to FIG. 1 or FIG. 2 is applicable to this embodiment.

The network system includes a macro cell 30 and multiple sub-cells 31, where the multiple sub-cells 31 are located in or partially located in a coverage range of the macro cell 30, each of the sub-cells 31 connects to the macro cell 30, and a connection interface may be an X2 interface, an S1 interface, or an air interface. When a user equipment accesses a sub-cell 31, the sub-cell 31 is a source cell. The method in this embodiment may include the following steps:
S31. A base station that controls a sub-cell in which the user equipment is located determines the macro cell as a neighboring cell according to location information of the user equipment.
S32. In a case that the user equipment does not meet a cell handover condition, the base station controlling the sub-cell sends context information of the user equipment to a base station controlling the macro cell.
S33. The base station controlling the macro cell stores the context information of the user equipment.
S34. In a process in which the user equipment accesses the macro cell from the sub-cell, the base station controlling the macro cell establishes a radio resource control connection with the user equipment according to the context information of the user equipment when the user equipment initiates, after a radio link failure occurs in the sub-cell, a radio resource control connection re-establishment request message to the base station controlling the macro cell.
S35. The base station controlling the sub-cell stores the context information of the user equipment within a first preset period of time.
S36. In a process in which the user equipment enters the sub-cell from the macro cell, the base station controlling the sub-cell establishes a radio resource control connection with the user equipment according to the context information of the user equipment when the user equipment initiates, after a radio link failure occurs in the macro cell, a radio resource control connection re-establishment request message to the base station controlling the sub-cell.
S37. The base station controlling the macro cell continues to store the context information of the user equipment.
S38. The base station controlling the macro cell deletes the context information of the user equipment when the user equipment leaves the coverage range of the macro cell.

In the network system of this embodiment, the base station controlling the sub-cell 31 may be a femtocell (Femto). If the femtocell further includes a semi-open and/or full-open frequency band apart from a closed subscriber group (Closed Subscriber Group, CSG) frequency band, after a radio link failure occurs on the user equipment, the user equipment may select another macro cell that has a frequency different from a frequency of the macro cell and is covered by the base station controlling the macro cell, or select a semi-open and/or full-open cell covered by the femtocell.

In the method for re-establishing a radio resource control connection according to this embodiment of the present invention, in the case that a user equipment does not meet a cell handover condition, the source base station sends context information of the user equipment in advance to a base station that controls at least one neighboring cell determined by the source base station; in addition, the neighboring base station that possesses the context information of the user equipment is a prepared base station capable of successfully establishing a radio resource control connection with the user equipment, and the user equipment probably selects the neighboring cell after a radio link fails; in this way, after a radio link failure occurs, a success rate of re-establishing a radio resource control connection for the user equipment is relatively high.

In another embodiment of this present invention, the source base station in the methods corresponding to FIG. 1 to FIG. 4 may be a mobile base station, for example, a mobile relay. The mobile base station may be located in a vehicle. When a user in the vehicle approaches a bus stop, the location information indicates that the user equipment enters an area of at least one fixed cell. The mobile base station determines the at least one fixed cell as the neighboring cell according to the location information of the user equipment, and sends the context information of the user equipment to a base station controlling the at least one fixed cell. The base station controlling the at least one fixed cell stores the context information of the user equipment within the first preset period of time. If the user arrives at the stop and gets off the vehicle, the user equipment leaves the vehicle with the user, that is, the user equipment disconnects from the mobile base station. The user equipment may initiates a radio resource control connection re-establishment request to the at least one fixed cell. The base station controlling the at least one fixed cell possesses the context information of the user equipment; therefore, a radio resource control connection can be successfully established with the user equipment. If the user does not get off the vehicle at this stop, the base station controlling the at least one fixed cell deletes the context information of the user equipment after the first preset period of time times out.

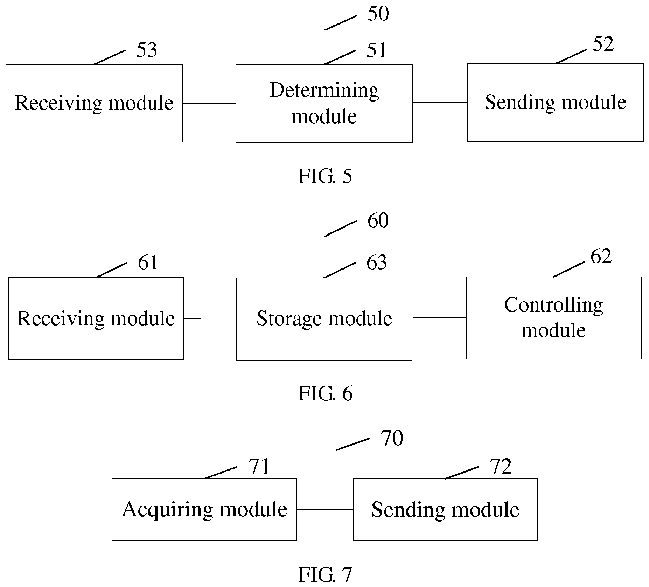

Referring to FIG. 5, FIG. 5 is a schematic structural diagram of a base station provided in an embodiment of the present invention. The base station 50 may be configured to implement the source base station in the methods corresponding to FIG. 1 to FIG. 4. Therefore, the description of the methods corresponding to FIG. 1 to FIG. 4 is applicable to the base station 50 in this embodiment. The base station 50 includes:
a determining module 51, configured to determine at least one neighboring cell; and
a sending module 52, configured to, in a case that a user equipment served by the base station does not meet a cell handover condition, send context information of the user equipment to a base station controlling the at least one neighboring cell.

In an implementation manner of this embodiment, the determining module 51 is specifically configured to determine the at least one neighboring cell according to location information of the user equipment. Alternatively, the location information includes a location of the user equipment in the source cell and a neighbor relationship between the source cell and one or more other cells.

In another implementation manner of this embodiment, the determining module 51 is specifically configured to determine the at least one neighboring cell according to the location information of the user equipment and historical information of user equipments in the source cell.

Alternatively, the at least one neighboring cell includes a neighboring cell of best signal quality for the user equipment.

In another implementation manner of this embodiment, the sending module 52 is specifically configured to send a virtual handover instruction message to the base station controlling the at least one neighboring cell, where the virtual handover instruction message includes the context information of the user equipment, and the virtual handover instruction message is used to instruct the base station controlling the at least one neighboring cell to delay performing admission control until a radio resource control connection establishment request is received.

In another implementation manner of this embodiment, the sending module 52 is specifically configured to send a handover instruction message to the base station controlling the at least one neighboring cell, where the handover instruction message includes the context information of the user equipment and a first mark, and the first mark is used to instruct the base station controlling the at least one neighboring cell to delay performing admission control until a radio resource control connection re-establishment request is received.

In another implementation manner of this embodiment, the sending module 52 is further configured to send at least one of the following to the base station controlling the at least one neighboring cell: bearer information of the user equipment, service quality information, and a security parameter of the user equipment.

In another implementation manner of this embodiment, the sending module 52 is further configured to notify the user equipment of the at least one neighboring cell, where the at least one neighboring cell is a cell that the user equipment preferably selects when re-establishing a radio resource control connection.

In another implementation manner of this embodiment, the base station 50 further includes a receiving module 53, which is configured to receive the cell of the best signal quality notified by the user equipment. The determining module 51 is specifically configured to determine the cell of the best signal quality notified by the user equipment as a neighboring cell.

According to the base station in this embodiment, in the case that a user equipment does not meet a cell handover condition, the source base station sends context information of the user equipment in advance to a base station that controls at least one neighboring cell determined by the source base station; in addition, the neighboring base station that possesses the context information of the user equipment is a prepared base station capable of successfully establishing a radio resource control connection with the user equipment, and the user equipment probably selects the neighboring cell after a radio link fails; in this way, after a radio link failure occurs, a success rate of re-establishing a radio resource control connection for the user equipment is relatively high.

Referring to FIG. 6, FIG. 6 is a schematic structural diagram of a target base station provided in another embodiment of the present invention. The target base station 60 may be configured to implement the target base station controlling the neighboring cell in the methods corresponding to FIG. 1 to FIG. 4. Therefore, the description of the methods corresponding to FIG. 1 to FIG. 4 is applicable to the base station 60 in this embodiment. The target base station 60 includes:
a receiving module 61, configured to receive context information of a user equipment sent by a source base station that controls a source cell; and
a controlling module 62, configured to, if the target base station receives a radio resource control connection establishment request sent by the user equipment, establish a radio resource control connection with the user equipment according to the context information.

In an implementation manner of this embodiment, the receiving module 61 is specifically configured to receive a virtual handover instruction message sent by the source base station, where the virtual handover instruction message includes the context information of the user equipment. The controlling module 62 is further configured to delay, according to the virtual handover instruction message, performing admission control until a radio resource control connection establishment request is received.

In another implementation manner of this embodiment, the receiving module 61 is specifically configured to receive a handover instruction message sent by the source base station, where the handover instruction message includes the context information of the user equipment and a first mark. The controlling module 62 is further configured to delay, according to the first mark, performing admission control until a radio resource control connection establishment request is received.

In another implementation manner of this embodiment, the receiving module 61 is further configured to receive at least one of the following sent by the source base station: bearer information of the user equipment, service quality information, and a security parameter of the user equipment.

In another implementation manner of this embodiment, the target base station 60 further includes a storage module 63, which is configured to store the context information of the user equipment for a preset period of time. Within the preset period of time, the context information of the user equipment is deleted if the target base station does not receive a radio resource control connection establishment request sent by the user equipment.

According to the target base station in this embodiment, in the case that a user equipment does not meet a cell handover condition, the source base station sends context information of the user equipment in advance to a base station that controls at least one neighboring cell determined by the source base station; in addition, the neighboring base station that possesses the context information of the user equipment is a prepared base station capable of successfully establishing a radio resource control connection with the user equipment, and the user equipment probably selects the neighboring cell after a radio link fails; in this way, after a radio link failure occurs, a success rate of re-establishing a radio resource control connection for the user equipment is relatively high.

Referring to FIG. 7, FIG. 7 is a schematic structural diagram of a user equipment provided in an embodiment of the present invention. The user equipment 70 may be configured to implement the user equipment in the methods corresponding to FIG. 1 to FIG. 4. Therefore, the description of the methods corresponding to FIG. 1 to FIG. 4 is applicable to the user equipment 70 in this embodiment. The user equipment 70 includes:
an acquiring module 71, configured to, when it is obtained, by measurement, that a block error rate of a source cell is higher than a first threshold, obtain a neighboring cell of best signal quality for the user equipment; and
a sending module 72, configured to notify a source base station controlling the source cell of the neighboring cell, so that the source base station sends context information of the user equipment to the neighboring cell.

In an implementation manner of this embodiment, the first threshold is lower than a second threshold, where the second threshold is a block error rate that triggers the user equipment to produce out-of-synchronization primitive.

Because the first threshold is lower than the second threshold, the user equipment 70 is capable of notifying, before out-of-synchronization occurs, the source base station controlling the source cell of the neighboring cell, so as to avoid a notification failure after the out-of-synchronization causes a radio link failure. In this way, after the radio link failure occurs, a success rate of re-establishing a radio resource control connection for the user equipment is relatively high.

Finally, it should be noted that, a person of ordinary skill in the art may understand that all or a part of the processes of the methods in the foregoing embodiments may be implemented by a computer program instructing relevant hardware. The program may be stored in a computer readable storage medium. When the program runs, the processes of the methods in the embodiments are performed. The storage medium may be a magnetic disk, an optical disc, a read-only memory (ROM), or a random access memory (RAM).

The functional units in the embodiments of the present invention may be integrated into a processing module, or each of the units may exist alone physically, or two or more units are integrated into one module. The integrated modules may be implemented in a form of hardware, or may be implemented in a form of a software functional module. When the integrated modules are implemented in a form of a software functional module and sold or used as an independent product, the integrated modules may be stored in a computer-readable storage medium. The foregoing storage medium may be a read-only memory, a magnetic disk, or an optical disc. The foregoing apparatus or system may perform the methods in corresponding method embodiments.

The foregoing descriptions are merely exemplary embodiments of the present invention, but are not intended to limit the present invention. Any modification, equivalent replacement, or improvement made within the principle of the present invention shall fall within the protection scope of the present invention.

## Claims

1. A method for re-establishing a radio resource control connection, comprising:
determining, by a source base station that controls a source cell in which a user equipment is located, at least one neighboring cell; and
in a case that the user equipment does not meet a cell handover condition, sending, by the source base station, context information of the user equipment to a base station controlling the at least one neighboring cell;
the method being **characterized in that** the sending, by the source base station, context information of the user equipment to a base station controlling the at least one neighboring cell comprises:
sending, by the source base station, a handover instruction message to the base station controlling the at least one neighboring cell, wherein the handover instruction message comprises the context information of the user equipment, and the handover instruction message is used to instruct the base station controlling the at least one neighboring cell to delay performing admission control until a radio resource control connection establishment request is received.

2. The method for re-establishing a radio resource control connection according to claim 1, wherein the determining, by a source base station that controls a source cell in which a user equipment is located, at least one neighboring cell comprises:
determining, by the source base station that controls the source cell in which the user equipment is located, at least one neighboring cell according to location information of the user equipment.

3. The method for re-establishing a radio resource control connection according to claim 2, wherein the location information comprises a location of the user equipment in the source cell and a neighbor relationship between the source cell and one or more other cells.

4. The method for re-establishing a radio resource control connection according to claim 2 or 3, wherein the determining, by the source base station that controls the source cell in which the user equipment is located, at least one neighboring cell according to location information of the user equipment comprises:
determining, by the source base station that controls the source cell in which the user equipment is located, at least one neighboring cell according to the location information of the user equipment and historical information of user equipments in the source cell.

5. The method for re-establishing a radio resource control connection according to any one of claims 1 to 4, wherein the at least one neighboring cell comprises a neighboring cell of best signal quality for the user equipment.

6. The method for re-establishing a radio resource control connection according to any one of claims 1 to 5, wherein the method further comprises:
sending, by the source base station, at least one of the following to the base station controlling the at least one neighboring cell: bearer information of the user equipment, service quality information, and a security parameter of the user equipment.

7. The method for re-establishing a radio resource control connection according to any one of claims 1 to 6, wherein the method further comprises:
notifying, by the source base station, the user equipment of the at least one neighboring cell, wherein the at least one neighboring cell is a cell that the user equipment preferably selects when re-establishing a radio resource control connection.

8. The method for re-establishing a radio resource control connection according to any one of claims 1 to 7, wherein the method further comprises:
receiving, by the source base station, a handover response message sent by a target base station controlling a target cell, wherein the handover response message is used to indicate that the user equipment has re-established a radio resource control connection to the target cell or is used to indicate that the source base station needs to initiate a handover process to the target base station, and the target cell is one of the at least one neighboring cell.

9. The method for re-establishing a radio resource control connection according to any one of claims 1 to 8, wherein the method further comprises:
receiving, by the source station, an admission control result sent by the target base station controlling the target cell, and starting data forwarding according to the admission control result.

10. The method for re-establishing a radio resource control connection according to any one of claims 2 to 9, wherein when the location information indicates that the source cell is covered or partially covered by another cell and the source cell has a connection with the another cell, the determining, by the source base station that controls the source cell in which the user equipment is located, at least one neighboring cell according to location information of the user equipment comprises:
determining, by the source base station that controls the source cell in which the user equipment is located, the another cell as a neighboring cell according to the location information of the user equipment.

11. The method for re-establishing a radio resource control connection according to claim 10, wherein the method further comprises:
if no radio resource control connection is re-established in a phase of connecting the user equipment to the source cell, instructing, by the source base station, the target base station to release the context information of the user equipment when the user equipment leaves the source cell.

12. The method for re-establishing a radio resource control connection according to any one of claims 2 to 9, wherein when the source base station is a mobile base station and the location information indicates that the user equipment enters an area of at least one fixed cell, the determining, by the source base station that controls the source cell in which the user equipment is located, at least one neighboring cell according to location information of the user equipment comprises:
determining, by the mobile base station, the at least one fixed cell as a neighboring cell according to the location information of the user equipment.

13. The method for re-establishing a radio resource control connection according to claim 1, wherein the method further comprises:
receiving, by the source base station that controls the source cell in which the user equipment is located, a cell of best signal quality notified by the user equipment; and
the determining, by a source base station that controls a source cell in which a user equipment is located, at least one neighboring cell comprises:
determining, by the source base station, the cell of the best signal quality notified by the user equipment as a neighboring cell.

14. The method for re-establishing a radio resource control connection according to any one of claims 1 to 13, wherein the handover instruction message is a virtual handover instruction message.

15. The method for re-establishing a radio resource control connection according to any one of claims 1 to 13, wherein the handover instruction message further comprises a first mark, and the first mark is used to instruct the base station controlling the at least one neighboring cell to delay performing admission control until a radio resource control connection establishment request is received.

## Patentansprüche

1. Verfahren zur Wiederherstellung einer Funkressourcen-Steuerverbindung, das Folgendes umfasst:
Bestimmen, durch eine Quellenbasisstation, die eine Quellenzelle, in der sich ein Benutzergerät befindet, steuert, von mindestens einer Nachbarzelle; und
im Fall, dass das Benutzergerät eine Zellenübergabebedingung nicht erfüllt, Senden, durch die Quellenbasisstation, von Kontextinformationen des Benutzergeräts zu einer Basisstation, die die mindestens eine Nachbarzelle steuert;
wobei das Verfahren **dadurch gekennzeichnet ist, dass** das Senden, durch die Quellenbasisstation, von Kontextinformationen des Benutzergeräts zu einer Basisstation, die die mindestens eine Nachbarzelle steuert, Folgendes umfasst:
Senden, durch die Quellenbasisstation, einer Übergabeanweisungsnachricht zur Basisstation, die die mindestens eine Nachbarzelle steuert, wobei die Übergabeanweisungsnachricht die Kontextinformationen des Benutzergeräts umfasst und die Übergabeanweisungsnachricht zum Anweisen der Basisstation, die die mindestens eine Nachbarzelle steuert, das Durchführen einer Zulassungskontrolle zu verzögern, bis eine Herstellungsanfrage für eine Funkressourcen-Steuerverbindung empfangen wird, verwendet wird.

2. Verfahren zur Wiederherstellung einer Funkressourcen-Steuerverbindung nach Anspruch 1, wobei das Bestimmen, durch eine Quellenbasisstation, die eine Quellenzelle, in der sich ein Benutzergerät befindet, steuert, von mindestens einer Nachbarzelle Folgendes umfasst:
Bestimmen, durch die Quellenbasisstation, die die Quellenzelle, in der sich das Benutzergerät befindet, steuert, von mindestens einer Nachbarzelle gemäß den Positionsinformationen des Benutzergeräts.

3. Verfahren zur Wiederherstellung einer Funkressourcen-Steuerverbindung nach Anspruch 2, wobei die Positionsinformationen eine Position des Benutzergeräts in der Quellenzelle und eine Nachbarbeziehung zwischen der Quellenzelle und einer oder mehreren anderen Zellen umfassen.

4. Verfahren zur Wiederherstellung einer Funkressourcen-Steuerverbindung nach Anspruch 2 oder 3, wobei das Bestimmen, durch die Quellenbasisstation, die die Quellenzelle, in der sich das Benutzergerät befindet, steuert, von mindestens einer Nachbarzelle gemäß den Positionsinformationen des Benutzergeräts, Folgendes umfasst:
Bestimmen, durch die Quellenbasisstation, die die Quellenzelle, in der sich das Benutzergerät befindet, steuert, von mindestens einer Nachbarzelle gemäß den Positionsinformationen des Benutzergeräts und historischen Informationen von Benutzergeräten in der Quellenzelle.

5. Verfahren zur Wiederherstellung einer Funkressourcen-Steuerverbindung nach einem der Ansprüche 1 bis 4, wobei die mindestens eine Nachbarzelle eine Nachbarzelle mit bester Signalqualität für das Benutzergerät umfasst.

6. Verfahren zur Wiederherstellung einer Funkressourcen-Steuerverbindung nach einem der Ansprüche 1 bis 5, wobei das Verfahren ferner Folgendes umfasst:
Senden, durch die Quellenbasisstation, von Trägerinformationen des Benutzergeräts und/oder Dienstqualitätsinformationen und/oder eines Sicherheitsparameters des Benutzergeräts zur Basisstation, die die mindestens eine Nachbarzelle steuert.

7. Verfahren zur Wiederherstellung einer Funkressourcen-Steuerverbindung nach einem der Ansprüche 1 bis 6, wobei das Verfahren ferner Folgendes umfasst:
Benachrichtigen, durch die Quellenbasisstation, des Benutzergeräts der mindestens einen Nachbarzelle, wobei die mindestens eine Nachbarzelle eine Zelle ist, die das Benutzergerät vorzugsweise auswählt, wenn es eine Funkressourcen-Steuerverbindung wiederherstellt.

8. Verfahren zur Wiederherstellung einer Funkressourcen-Steuerverbindung nach einem der Ansprüche 1 bis 7, wobei das Verfahren ferner Folgendes umfasst:
Empfangen, durch die Quellenbasisstation, einer Übergabeantwortnachricht, die durch eine Zielbasisstation, die eine Zielzelle steuert, gesendet wird, wobei die Übergabeantwortnachricht zum Angeben, dass das Benutzergerät eine Funkressourcen-Steuerverbindung zur Zielzelle wiederhergestellt hat, verwendet wird oder zum Angeben, dass die Quellenbasisstation einen Übergabeprozess zur Zielbasisstation initiieren muss, verwendet wird, und die Zielzelle eine der mindestens einen Nachbarzelle ist.

9. Verfahren zur Wiederherstellung einer Funkressourcen-Steuerverbindung nach einem der Ansprüche 1 bis 8, wobei das Verfahren ferner Folgendes umfasst:
Empfangen, durch die Quellenbasisstation, eines Zulassungskontrollergebnisses, das durch die Zielbasisstation, die die Zielzelle steuert, gesendet wird, und Starten der Datenweiterleitung gemäß dem Zulassungskontrollergebnis.

10. Verfahren zur Wiederherstellung einer Funkressourcen-Steuerverbindung nach einem der Ansprüche 2 bis 9, wobei, wenn die Positionsinformationen angeben, dass die Quellenzelle durch eine andere Zelle abgedeckt oder teilweise abgedeckt wird und die Quellenzelle eine Verbindung mit der anderen Zelle aufweist, das Bestimmen, durch die Quellenbasisstation, die die Quellenzelle, in der sich das Benutzergerät befindet, steuert, von mindestens einer Nachbarzelle gemäß der Positionsinformationen des Benutzergeräts Folgendes umfasst:
Bestimmen, durch die Quellenbasisstation, die die Quellenzelle, in der sich das Benutzergerät befindet, steuert, der anderen Zelle als eine Nachbarzelle gemäß den Positionsinformationen des Benutzergeräts.

11. Verfahren zur Wiederherstellung einer Funkressourcen-Steuerverbindung nach Anspruch 10, wobei das Verfahren ferner Folgendes umfasst:
falls keine Funkressourcen-Steuerverbindung bei einer Phase des Verbindens des Benutzergeräts mit der Quellenzelle wiederhergestellt wird, Anweisen, durch die Quellenbasisstation, der Zielbasisstation, die Kontextinformationen des Benutzergeräts freizugeben, wenn das Benutzergerät die Quellenzelle verlässt.

12. Verfahren zur Wiederherstellung einer Funkressourcen-Steuerverbindung nach einem der Ansprüche 2 bis 9, wobei wenn die Quellenbasisstation eine mobile Basisstation ist und die Positionsinformationen angeben, dass das Benutzergerät in einen Bereich von mindestens einer festen Zelle eintritt, das Bestimmen, durch die Quellenbasisstation, die die Quellenzelle, in der sich das Benutzergerät befindet, steuert, von mindestens einer Nachbarzelle gemäß den Positionsinformationen des Benutzergeräts Folgendes umfasst:
Bestimmen, durch die mobile Basisstation, der mindestens einen festen Zelle als eine Nachbarzelle gemäß den Positionsinformationen des Benutzergeräts.

13. Verfahren zur Wiederherstellung einer Funkressourcen-Steuerverbindung nach Anspruch 1, wobei das Verfahren ferner Folgendes umfasst:
Empfangen, durch die Quellenbasisstation, die die Quellenzelle, in der sich das Benutzergerät befindet, steuert, einer Zelle mit bester Signalqualität, die durch das Benutzergerät benachrichtigt wird; und
das Bestimmen, durch eine Quellenbasisstation, die eine Quellenzelle, in der sich ein Benutzergerät befindet, steuert, von mindestens einer Nachbarzelle Folgendes umfasst:
Bestimmen, durch die Quellenbasisstation, der Zelle mit der besten Signalqualität, die durch das Benutzergerät benachrichtigt wird, als eine Nachbarzelle.

14. Verfahren zur Wiederherstellung einer Funkressourcen-Steuerverbindung nach einem der Ansprüche 1 bis 13, wobei die Übergabeanweisungsnachricht eine virtuelle Übergabeanweisungsnachricht ist.

15. Verfahren zur Wiederherstellung einer Funkressourcen-Steuerverbindung nach einem der Ansprüche 1 bis 13, wobei die Übergabeanweisungsnachricht ferner eine erste Markierung umfasst und die erste Markierung zum Anweisen der Basisstation, die die mindestens eine Nachbarzelle steuert, das Durchführen einer Zulassungskontrolle zu verzögern, bis eine Herstellungsanfrage für eine Funkressourcen-Steuerverbindung empfangen wird, verwendet wird.

## Revendications

1. Procédé pour rétablir une connexion de contrôle des ressources radio, comprenant la détermination, par une station de base source qui contrôle une cellule source dans laquelle un équipement utilisateur est situé, d'au moins une cellule voisine ; et dans un cas où l'équipement utilisateur ne remplit pas une condition de transfert
intercellulaire, l'envoi, par la station de base source, d'une information de contexte de l'équipement utilisateur à une station de base contrôlant l'au moins une cellule voisine ;
ce procédé étant **caractérisé en ce que** l'envoi, par la station de base source, d'une information de contexte de l'équipement utilisateur à une station de base contrôlant l'au moins une cellule voisine comprend :
l'envoi, par la station de base source, d'un message de demande de transfert à la station de base contrôlant l'au moins une cellule voisine, ce message de demande de transfert comprenant l'information de contexte de l'équipement utilisateur, et ce message de demande de transfert étant utilisé de façon à demander à la station de base contrôlant l'au moins une cellule voisine de retarder l'exécution du contrôle d'admission jusqu'à ce qu'une demande d'établissement de connexion de contrôle des ressources radio ait été reçue.

2. Procédé pour rétablir une connexion de contrôle des ressources radio selon la revendication 1, dans lequel la détermination, par une station de base source qui contrôle une cellule source dans laquelle un équipement utilisateur est situé, d'au moins une cellule voisine, comprend :
la détermination, par la station de base source qui contrôle la cellule source dans laquelle un équipement utilisateur est situé, d'au moins une cellule voisine selon une information d'emplacement de l'équipement utilisateur.

3. Procédé pour rétablir une connexion de contrôle des ressources radio selon la revendication 2, dans lequel l'information d'emplacement comprend un emplacement de l'équipement utilisateur dans la cellule source et un rapport de voisin entre la cellule source et une ou plusieurs autres cellules.

4. Procédé pour rétablir une connexion de contrôle des ressources radio selon la revendication 2 ou 3, dans lequel la détermination, par la station de base source qui contrôle la cellule source dans laquelle l'équipement utilisateur est situé, d'au moins une cellule voisine selon une information d'emplacement de l'équipement utilisateur comprend :
la détermination, par la station de base source qui contrôle la cellule source dans laquelle l'équipement utilisateur est situé, d'au moins une cellule voisine selon l'information d'emplacement de l'équipement utilisateur et des informations historiques des équipements utilisateurs dans la cellule source.

5. Procédé pour rétablir une connexion de contrôle des ressources radio selon l'une quelconque des revendications 1 à 4, dans lequel l'au moins une cellule voisine comprend une cellule voisine ayant la meilleure qualité de signal pour l'équipement utilisateur.

6. Procédé pour rétablir une connexion de contrôle des ressources radio selon l'une quelconque des revendications 1 à 5, ce procédé comprenant en outre :
l'envoi, par la station de base source, d'au moins une des informations suivantes à la station de base contrôlant l'au moins une cellule voisine : information du porteur de l'équipement utilisateur, information de la qualité du service, et un paramètre de sécurité de l'équipement utilisateur.

7. Procédé pour rétablir une connexion de contrôle des ressources radio selon l'une quelconque des revendications 1 à 6, ce procédé comprenant en outre :
la notification, par la station de base source, à l'équipement utilisateur, de l'au moins une cellule voisine, l'au moins une cellule voisine étant une cellule que l'équipement utilisateur choisit de préférence lors du rétablissement d'une connexion de contrôle des ressources radio.

8. Procédé pour rétablir une connexion de contrôle des ressources radio selon l'une quelconque des revendications 1 à 7, ce procédé comprenant en outre :
la réception, par la station de base source, d'un message de réponse de transfert envoyé par une station de base cible contrôlant une cellule cible, ce message de réponse de transfert étant utilisé pour indiquer que l'équipement utilisateur a rétabli une connexion de contrôle des ressources radio à la cellule cible ou étant utilisé pour indiquer que la station de base source a besoin de déclencher un processus de transfert à la station de base cible, et que la cellule cible est une de l'au moins une cellule voisine.

9. Procédé pour rétablir une connexion de contrôle des ressources radio selon l'une quelconque des revendications 1 à 8, ce procédé comprenant en outre :
la réception, par la station source, d'un résultat de contrôle d'admission envoyé par la station de base cible contrôlant la cellule cible, et le commencement du transfert de données selon le résultat du contrôle d'admission.

10. Procédé pour rétablir une connexion de contrôle des ressources radio selon l'une quelconque des revendications 2 à 9, dans lequel, lorsque l'information d'emplacement indique que la cellule source est couverte ou partiellement couverte par une autre cellule et que la cellule source a une connexion avec l'une autre cellule, la détermination, par la station de base source qui contrôle la cellule source dans laquelle l'équipement utilisateur est situé, d'au moins une cellule voisine selon une information d'emplacement de l'équipement utilisateur comprend :
la détermination, par la station de base source qui contrôle la cellule source dans laquelle l'équipement utilisateur est situé, de l'une autre cellule comme une cellule voisine selon l'information d'emplacement de l'équipement utilisateur.

11. Procédé pour rétablir une connexion de contrôle des ressources radio selon la revendication 10, ce procédé comprenant en outre :
si aucune connexion de contrôle des ressources radio n'est rétablie dans une phase de connexion de l'équipement utilisateur à la cellule source, la demande, par la station de base source, à la station de base cible de communiquer l'information de contexte de l'équipement utilisateur lorsque l'équipement utilisateur quitte la cellule source.

12. Procédé pour rétablir une connexion de contrôle des ressources radio selon l'une quelconque des revendications 2 à 9, dans lequel, lorsque la station de base source est une station de base mobile et l'information d'emplacement indique que l'équipement utilisateur pénètre dans une zone d'au moins une cellule fixe, la détermination, par la station de base source qui contrôle la cellule source dans laquelle l'équipement utilisateur est situé, d'au moins une cellule voisine selon une information d'emplacement de l'équipement utilisateur comprend :
la détermination, par la station de base mobile, de l'au moins une cellule fixe comme une cellule voisine selon l'information d'emplacement de l'équipement utilisateur.

13. Procédé pour rétablir une connexion de contrôle des ressources radio selon la revendication 1, ce procédé comprenant en outre :
la réception, par la station de base source qui contrôle la cellule source dans laquelle l'équipement utilisateur est situé, d'une cellule ayant la meilleure qualité de signal notifiée par l'équipement utilisateur ; et
la détermination, par une station de base source qui contrôle une cellule source dans laquelle un équipement utilisateur est situé, d'au moins une cellule voisine comprenant :
la détermination, par la station de base source, de la cellule ayant la meilleure qualité de signal notifiée par l'équipement utilisateur comme une cellule voisine.

14. Procédé pour rétablir une connexion de contrôle des ressources radio selon l'une quelconque des revendications 1 à 13, dans lequel le message de demande de transfert est un message de demande de transfert virtuel.

15. Procédé pour rétablir une connexion de contrôle des ressources radio selon l'une quelconque des revendications 1 à 13, dans lequel le message d'instruction de transfert comprend en outre une première marque, et cette première marque est utilisée pour demander à la station de base contrôlant l'au moins une cellule voisine de retarder l'exécution du contrôle d'admission jusqu'à ce qu'une demande d'établissement de connexion de contrôle des ressources radio ait été reçue.
